# EUROPÄISCHE PATENTANMELDUNG

(11) **EP 1 162 540 A1**
(43) Veröffentlichungstag der Anmeldung: **12.12.2001**
(21) Anmeldenummer: 00112203.5
(22) Anmeldetag: 07.06.2000
(51) Int. Cl.: G06F 11/16

(54) **Vorrichtung und Verfahren zur Synchronisation eines Systems von gekoppelten Datenverarbeitungsanlagen**

(71) Anmelder: Siemens Schweiz AG, 8047 Zürich (CH)
(72) Erfinder: Friedli, Markus, 8055 Zürich (CH); Baumann, René, 8424 Embrach (CH)

(57) **Zusammenfassung**

Das erfindungsgemäße System und Verfahren zur Synchronisation von gekoppelten Mehrrechnersystemen, insbesondere der Eisenbahntechnik dient einer gesteigerten Verfügbarkeit und Sicherheit.

Durch das erfindungsgemäße System wird in Mehrrechnersystemen nur noch ein Hardwarezeitgeber benötigt, somit werden die entstehenden Risiken einer Synchronisation von Hardwarezeitgebern ausgeschalten. Damit ein gekoppelter Rechner (R1,R2) auch über einen Takt (Tick) verfügt, wird dieser durch das Verfahren der Zeitsynchronisation nachgebildet. Da jeder Rechner (R1,R2) normalerweise mit einem Hardwarezeitgeber ausgerüstet ist, kann eine Zuteilung des aktiven Hardwarezeitgebers zu einem Rechner (R1,R2) bei Bedarf ändern.

Um eine geeignete Trennung der Synchronisation (SYN&CHK) von den Anwendungen (APP) zu erhalten, wurden im erfindungsgemäßem System sogenannte Subsystemschritte (RD,PC1,PC2,OT) für Anwendungsprozesse eingeführt. Diese Subsystemschritte (RD,PC1,PC2,OT) sind unabhängig vom Betriebssystem (OS-LAY) und einer Hardware (HW-LAY). Dies Erlaubt eine Aufteilung der Anwendungen (APP) in gleichbleibende Elemente ohne daß die Aufgabe der Anwendung (APP) berücksichtigt werden muß. Zwischen diesen Schritten liegen Synchronisationspunkte für eine Gültigkeitsüberprüfung.

## Beschreibung

Die vorliegende Erfindung betrifft eine Vorrichtung und ein Verfahren nach dem Oberbegriff des Patentanspruchs 1 beziehungsweise 3.

In technischen Bereichen, in denen strenge sicherheitstechnische Bestimmungen einzuhalten sind, werden Systeme von gekoppelten Datenverarbeitungsanlagen, auch als Mehrrechnersysteme bezeichnet eingesetzt, um mittels Redundanz die geforderten Sicherheitsstandards erfüllen zu können.

Mehrrechnersysteme können in sogenannt diversitärer Hardware ausgeführt sein. Ein Mehrrechnersysteme beruht dann auf diversitäter Hardware, wenn einzelne Komponenten wie insbesondere Prozessoren in verschiedener Architektur ausgeführt und meist von verschiedenen Herstellern produziert sind. Mit diversitärer Hardware sind auch Fehler erkennbar, die einem bestimmten Rechner bzw. Prozessor inhärent sind. Um besonders die Wartung und die Logistik zu vereinfachen, wird zunehmend sogenannt unitäre Hardware eingesetzt, die sich durch einen einheitlichen Hardware-Aufbau auszeichnet.

Typische Mehrrechnersysteme sind unter Begriffen 2v2 und 2v3 und weiteren Konfigurationen bekannt.

Bei einem 2v2-System sind zwei Datenverarbeitungsanlagen durch eine Schnittstelle miteinander gekoppelt. Bei einem z.B. periodisch vorgenommenen Vergleich von Zustandsdaten der beiden Datenverarbeitungsanlagen erfolgt nur dann eine Weiterverarbeitung von Prozessdaten, wenn bei diesem Vergleich beide Datenverarbeitungsanlagen je Gleichheit festgestellt haben, bei einer vorliegenden Ungleichheit erfolgt eine Fehlerbehandlung. Alle oder mindestens sicherheitsrelevante Befehle werden bei Ungleichheit nicht ausgeführt und das zu steuernde System wird in einen sicheren Zustand gebracht.

Bei einem 2v3-System sind drei Datenverarbeitungsanlagen je über eine Schnittstelle mit den anderen Datenverarbeitungsanlagen gekoppelt. Bei einem paarweise vorgenommenen Vergleich von Zustandsdaten erfolgt eine Weiterverarbeitung von Prozessdaten nur dann, wenn zwei Datenverarbeitungsanlagen bei einem Vergleich je Gleichheit festgestellt haben. Dabei wird angenommen, dass sich die dritte Datenverarbeitungsanlage in einem fehlerbehafteten Zustand befindet. Solche Verfahren sind unter dem Begriff "Voting" bekannt.

Um die geforderten Sicherheitsstandards zu erfüllen, ist eine Lösung für unitäre Hardware bekannt, bei der ein Systemtakt je identisch den betreffenden Prozessoren zugeführt wird und beide Prozessoren die identische Software bearbeiten. Auf Busebene wird ein Vergleich von Datenzuständen, Datenflüssen durchgeführt und bei Ungleichheit wird auf einen Fehler erkannt. Diese Lösung ist deshalb nachteilig, weil eine spezielle Vergleichsschaltung notwendig ist, die den Laufzeitdifferenzen Rechnung trägt.

Eine weitere Lösung besteht darin, zu bestimmten Zeitpunkten jene Speicherinhalte zu vergleichen, aus denen die Konsistenz der sicherheitsrelevanten Daten hervorgeht bzw. hervorgehen sollte.

Den vorstehend genannten Lösungen mit Ausnahme des Vergleichs auf Busebene ist gemeinsam, dass bei der Entwicklung von sicherheitsrelevanten Anwendungen diese Mechanismen stets innerhalb der Anwendungen in Form von speziell dafür vorgesehenem Code sichtbar waren. Insbesondere musste sich jede mit der Entwicklung einer solchen Anwendung betraute Person nicht nur mit der Anwendung sondern auch mit der Synchronisation von Datenverarbeitungsanlagen und/oder von anstehenden Eingangs- und Ausgangsdaten befassen.

Eine weitere nachteilige Gemeinsamkeit der genannten Lösungen ist die Verwendung von einzelnen Taktgebern auf den Rechnern, welche vom Systemstart an aufwendig synchronisiert werden müssen, was wiederum beim Aufstarten Risiken birgt.

Der vorliegenden Erfindung liegt daher die Aufgabe zugrunde, eine Vorrichtung und ein Verfahren anzugeben, welche es ermöglichen, sicherheitstechnische Anwendungen zu realisieren, bei denen eine klare einfache Trennung von eigentlicher Anwendung und Synchronisation möglich ist.

Diese Aufgabe wird durch die im Patentanspruch 1 bzw. 3 angegebenen Maßnahmen gelöst. Vorteilhafte Ausgestaltungen der Erfindung sind in weiteren Ansprüchen angegeben.

Durch das erfindungsgemäße System wird in Mehrrechnersystemen, zum Beispiel 2v2- oder 2v3-Systemen nur noch ein aktiver Hardwarezeitgeber (Master-Clock) benötigt, somit werden die entstehenden Risiken einer gegenseitigen Synchronisation von Hardwarezeitgebern ausgeschaltet. Damit ein gekoppelter Rechner auch über einen Takt verfügt, wird dieser durch das Verfahren der Zeitsynchronisation nachgebildet. Da jeder Rechner mit einem Hardwarezeitgeber ausgerüstet ist, wird beim Systemstart festgelegt, welcher Rechner über den sogenannten Master-Clock verfügt. Diese Zuteilung ist bei Bedarf während des Betriebs änderbar.

Die erfindungsgemäße Vorrichtung und das erfindungsgemäße Verfahren ist generell für alle Arten von Mehrrechnersystemen anwendbar.

Um eine geeignete Trennung der Synchronisation von den Anwendungen zu erhalten, wurden im erfindungsgemäßem Verfahren sogenannte Subsystemschritte für Anwendungsprozesse eingeführt. Diese Subsystemschritte sind unabhängig vom Betriebssystem und einer Hardware. Dies erlaubt eine Aufteilung der Anwendungsprozesse in gleichbleibende Prozesselemente ohne dass die Aufgabe der Anwendungsprozesse an sich berücksichtigt werden muß. Die Subsystemschritte eines Anwendungsprozesses sind Eingabe, Verarbeitung und Ausgabe. Zwischen diesen Schritten liegen Synchronisationspunkte für eine Gültigkeitsüberprüfung.

Die Ergebnisse dieser Subsystemschritte werden mit den Redundanzrechnern verglichen. Dies ermöglicht im Fehlerfall ein schnelles Eingreifen ins System, was bei sicherheitskritischen Anwendungen besonders wichtig ist. Ein weiterer Vorteil beim Beheben von Fehlern ist die Korrekturmöglichkeit, da ein Subsystemschritt einfacher korrigiert werden kann als ein ganzer Prozess.

Das erfindungsgemäßen Verfahren sieht eine standardisierte Datenschnittstelle für den gegenseitigen Datenaustausch der Datenverarbeitungsanlagen vor. Durch die Standardisierung der Schnittstelle in Verbindung mit der Definition von Synchronisationspunkten können die zu überprüfenden Daten einfach und sicher den richtigen Verarbeitungsschritten zugewiesen werden. Daraus resultiert der Vorteil, dass auch Datenverarbeitungsanlagen mit Multitaskingsystemen ohne weitere Systemzusätze und ohne Einschränkungen das erfindungsgemäße Verfahren anwenden können.

Durch den flexiblen Aufbau der Telegramme sind im erfindungsgemäßem Verfahren Daten für die Überprüfung parametrierbar, das heißt, die Telegrammlänge kann den Bedürfnissen angepasst werden, so dass im Extremfall keine Daten übergeben werden oder andererseits sehr viele Daten. Dies trägt unter anderem zur Optimierung der Synchronisationsdauer bei. Im weiteren sind auch die Daten an sich parametrierbar um ein Voting durchführen zu können oder um analoge Werte besser vergleichen zu können.

Ausführungsbeispiele der Erfindung werden nachfolgend anhand der Zeichnung näher erläutert. Dabei zeigt:
- Figur 1: die Systemarchitektur,
- Figur 2: Zeitsynchronisation eines 2v2-Systems,
- Figur 3: Datensynchronisation eines 2v2-Systems,
- Figur 5: allgemeine Datensynchronisationsstruktur und

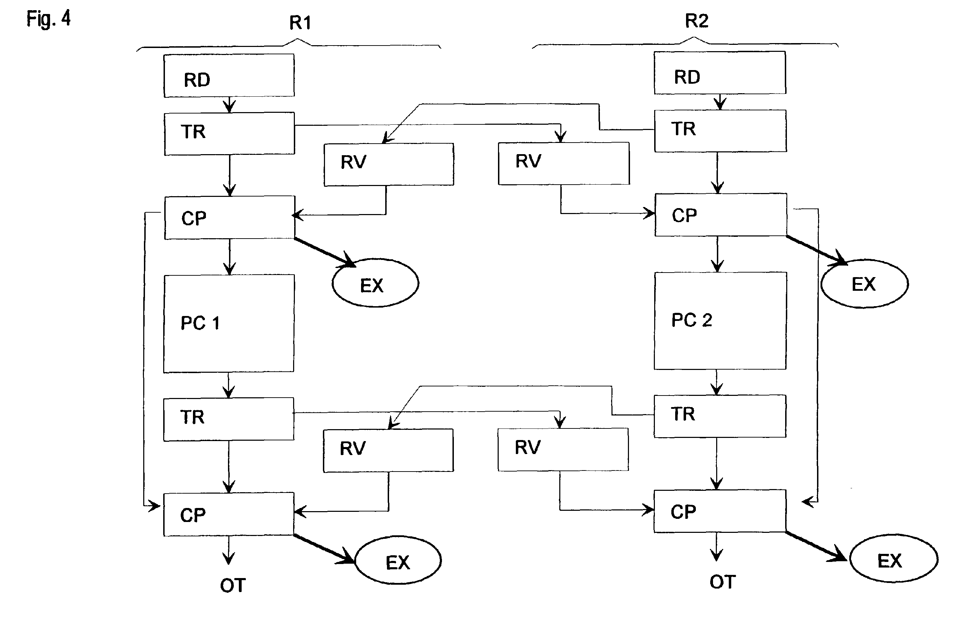

- Figur 4: ein Telegrammaufbau.

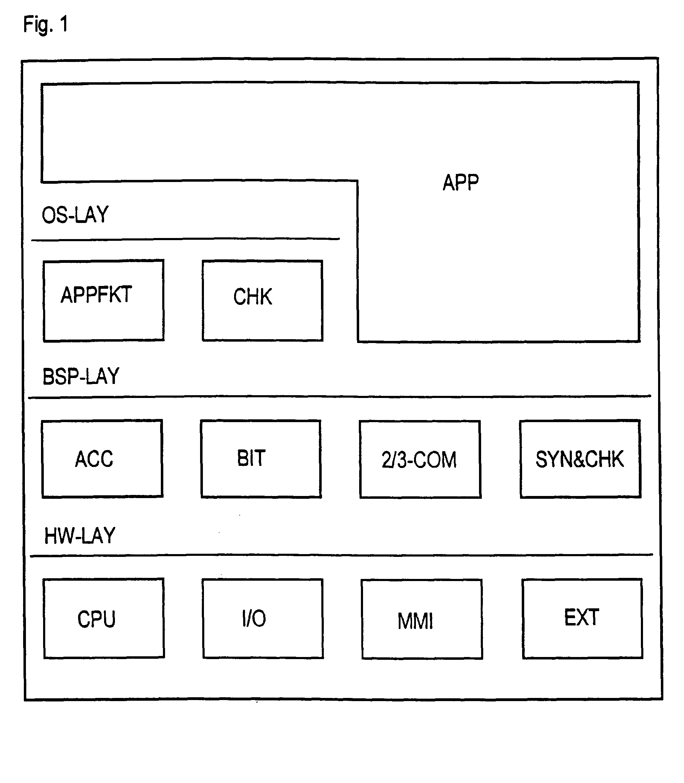

In den nachfolgenden Ausführungsbeispielen werden die Datenverarbeitungsanlagen als Rechner bezeichnet. Figur 1 zeigt einen typischen Aufbau einer Systemarchitektur mit den vier Schichten Hardware HW-LAY, Treiber BSP-LAY, Betriebssystem OS-LAY und Anwendung APP. Diese Struktur erlaubt eine schichtenweise Trennung der Verfahren von der Hardware. Es ist ersichtlich, dass Anwendungen APP mit zeitkritischen Funktionen direkt, ohne Umwege über das Betriebssystem OS-LAY operieren. Im erfindungsgemäßen System wurden nun die Einheiten Mehrrechnerkommunikation 2/3-COM und Synchronisation & Sicherung SYN&CHK in die Schicht Treiber eingestuft. Das heißt, dass die Anwendung APP schon von der Architektur her von der Synchronisation SYN&CHK getrennt ist. Die Synchronisationseinheit SYN&CHK und die Kommunikationseinheit 2/3-COM wird vorzugsweise als autonome Treiberfunktion ausgebildet, so dass diese Einheiten Selbständig für sich arbeiten können und von allen Anwendungen APP, sowie vom Betriebssystem OS-LAY verwendbar sind. Die Treibereinheiten arbeiten mit der Hardware zusammen und werden demzufolge dem Rechner angepaßt. Damit nicht alle Treiberfunktionen der Hardware angepaßt werden müssen, können auch Treiberfunktionen andere Treiberfunktionen verwenden, so dass für viele Treiberfunktionen wieder allgemeingültige Ansätze gefunden werden können.

Eine Synchronisation erfolgt in zwei Stufen. Einerseits werden Betriebssysteme OS-LAY synchronisiert, andererseits werden Daten (Anwendungsdaten) synchronisiert.

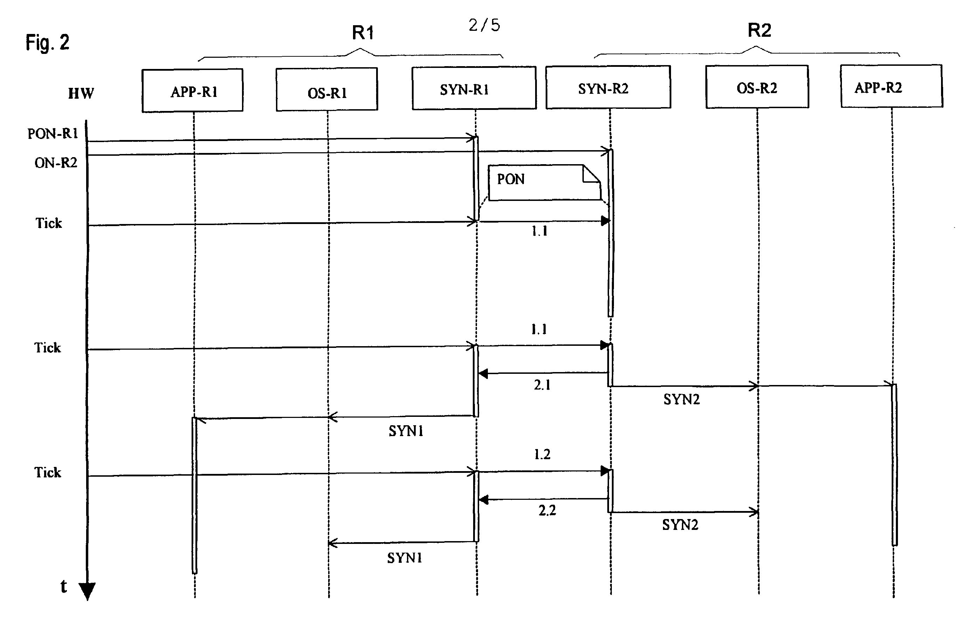

Figur 2 zeigt den erfindungsgemäßen Aufbau einer Zeitsynchronisation des Systems. Mit dieser Zeitsynchronisation wird erreicht, dass die Zeit für die Rechner zu einer externen Dimension wird. Die Zeiteinheiten beginnen und enden auf allen Rechnern nahezu gleichzeitig. Eine Synchronisation unter den Rechnern kann über serielle Verbindungen erfolgen.

Das Sequenzdiagramm, Figur 2, zeigt die Funktionsweise der Zeitsynchronisation für ein 2v2-System. Das Verfahren funktioniert auch für Systeme höherer Ordnung.

Einer der Rechner, in der Figur 2 mit R1 bezeichnet, wird als eine Art Master festgelegt, er verfügt über einen aktiven Hardwarezeitgeber HW. Das Verfahren ist aber kein Master-Slave-Verfahren. Der Rechner R1 dient nur der Definition der Reihenfolge unter den Rechnern, um das Verfahren zu vereinfachen und Randbedingungen zu verdeutlichen. Bei absolut gleichwertigen Rechnern ist die Fehlererkennung bei Grenzbedingungen schwieriger zu verstehen. Vor allem bei 2v3-Systemen kann der Masterrechner ändern, zum Beispiel, wenn der ursprüngliche Master abgeschaltet wurde.

Auf dem Rechner R1 wird die Zeitsynchronisation durch einen aktiven Hardwarezeitgeber HW gestartet. Ein taktgebender Zeitimpuls dieses Hardwarezeitgebers HW wird Tick genannt. Für jeden Tick des Hardwarezeitgebers HW folgt im Normalfall von beiden Rechnern ein Telegramm 1.1 resp. 2.1.
Nach jedem Auftreten des Ticks sendet die Synchronisation SYN-R1 des Rechners R1 ein Telegramm. Auf dem Rechner R2 wird die Synchronisation SYN-R2 durch das Eintreffen dieses Telegramms des Rechners R1 gestartet. Falls ein korrektes Telegramm 1.1 empfangen wurde, wird ein eigenes Telegramm 2.1 zurückgesendet. Gleichzeitig wird die Zeitsynchronisation SYN2 für das eigene Betriebssystem OS-R2 ausgelöst. Aufgrund der Zeitsynchronisation SYN2 können Aktionen ausgelöst werden, zum Beispiel das Starten einer Anwendung APP-R2 oder das Datensynchronisieren oder andere Ein- und Ausgaben.

Der Rechner R1 löst seine Zeitsynchronisation SYN1 seines Betriebssystems OS-R1 aus, wenn er ein korrektes Telegramm 2.2 des Rechners R2 empfangen hat. In diesem Beispiel startet der Rechner R1 seine Anwendung APP-R1.
Während einer Initialisierung PON, z.B. nach einem Einschalten der Rechner R1 und R2, sendet der Rechner R1 solange das erste Telegramm 1.1, bis er ein Telegramm 2.1 vom Rechner R2 erhält.
Das gleiche Vorgehen wird auch bei Übertragungsstörungen angewendet. Falls ein Telegramm des Rechner R1 nicht auf dem Rechner R2 nicht korrekt empfangen werden kann, sendet der Rechner R2 kein Telegramm zurück und der Rechner R1 wiederholt das gleiche Telegramm beim nächsten Tick. Die Anzahl Wiederholungen bis zum Abbruch ist einstellbar. Bei Übertragungsstörungen vom Rechner R2 zum Rechner R1, kann genau gleich vorgegangen werden.

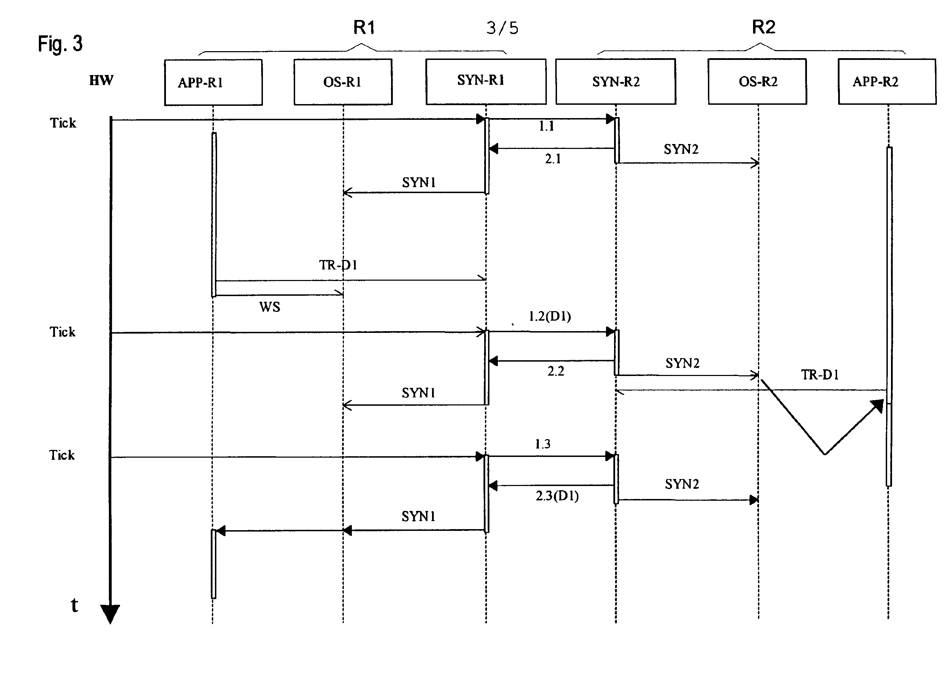

Telegramme in den Figuren 3 und 4 sind mit den Zeitsynchronisationsdaten beschriftet, Rechnernummer des Absenders und Telegrammnummer.
Zwei Beispiele:
1.1 : Rechner R1, Telegramm 1
2.3 : Rechner R2, Telegramm 3

Durch eine solche Adresse der Telegramme ist eine genaue Zuordnung und Überprüfung möglich. Die Adresse kann bei Bedarf erweitert werden.

Um einen Ausfall des Ticks sicher zu detektieren, kann ein Hardwarezeitgeber HW jedes einzelnen Rechners R1,R2 mit dem Auftreten des Ticks verglichen werden. Durch den Vergleich, mit zu definierenden Zeitrastern, kann ein Ausfall des Ticks eindeutig detektiert werden. Der gleichzeitige Ausfall der Hardwarezeitgeber auf allen Rechnern kann durch eine Zeitüberwachungsfunktion (Watchdogfunktion) kontrolliert werden.

Figur 3 zeigt eine Datensynchronisation von asynchronen Prozessen auf den Rechnern R1 und R2.

Die Datensynchronisation verwendet Telegramme einer Zeitsynchronisation für einen Datenabgleich unter den Rechnern R1 und R2. Falls kein Datenabgleich stattfinden muß, verfügen die Telegramme vorteilhaft nur über Angaben für die Zeitsynchronisation.
Als Beispiel übergibt eine Anwendung APP-R1 Daten D1 an ein Treibermodul einer Synchronisation SYN-R1. Dieses Treibermodul benötigt nun einen Tick eines Hardwarezeitgebers HW um die Datensynchronisation zu starten. Die Anwendung APP-R1 wartet nun so lange, bis sie gültige Daten D1 vom Rechner R2 bekommt oder durch eine Stillstandsüberprüfung (Timeout) eine anwendungsspezifische Ausnahmeprozedur startet. Mit einer Meldung WS kann ein solcher Zustand des Wartens dem Betriebssystem OS-R1 mitgeteilt werden. In der Figur 3 werden die Daten D1 mit dem Telegramm 1.2(D1) an das Treibermodul der Synchronisation SYN-R2 des Rechner R2 übertragen. Der Rechner R2 antwortet mit dem Telegramm 2.2 ohne Daten D1, da diese noch nicht von der Anwendung APP-R2 bereit stehen. Die Datensynchronisation des Rechner R1 kann somit die Anwendung APP-R1 noch nicht synchronisieren. Auf dem Rechner R2 werden die vollständigen Daten D1 vom Rechner R1 für die Anwendung APP-R1 bereitgestellt. Sobald die Anwendung APP-R1 ihre Daten D1 an das Treibermodul SYN-R2 übergeben hat, erhält sie nun die Daten D1 vom Rechner R1 zur Überprüfung. Die Anwendung APP-R2 kann somit ohne Verzögerung ihre Verarbeitung fortführen. Die Daten von der Anwendung APP-R2 werden mit dem nächsten Tick übergeben. Mittels Antworttelegramm 2.3(D1) erhält nun der Rechner R1 die Daten vom Rechner R2, welche vom Treibermodul der Synchronisation SYN-R1 an die Anwendung APP-R1 weiter geleitet werden. Diese kann nach Überprüfung der Daten D1 Ihre Verarbeitung fortsetzten.

Es ist möglich, daß die APP-R2 über das Treibermodul SYN-R2 Daten an den Rechner R1 übergeben möchte, bevor die Anwendung APP-R1 bereit ist ihre Daten zu übergeben. Der Verfahrensablauf bleibt der Gleiche.

Es ist weiter möglich, daß verschiedene Teilprozesse der Anwendung APP-R1 des Rechners R1, welche Tasks genannt werden und gleichzeitig abgearbeitet werden, innerhalb der gleichen Zeitdauer bis zum nächsten Tick Daten übergeben möchten. Diese verschiedenen Daten werden durch das Treibermodul der Synchronisation SYN-R1 gesammelt und beim nächsten Tick wie beschrieben dem Rechner R2 als ein Telegramm übergeben. Das Treibermodul SYN-R2 auf der anderen Seite der Übertragung teilt die Daten wieder auf die verschiedenen Tasks seines Rechners auf, wobei die Reihenfolge der Datenzuweisung des sendenden Rechners zum steuern und überwachen der Prozesse vorteilhaft auf dem empfangenden Rechner beibehalten wird.

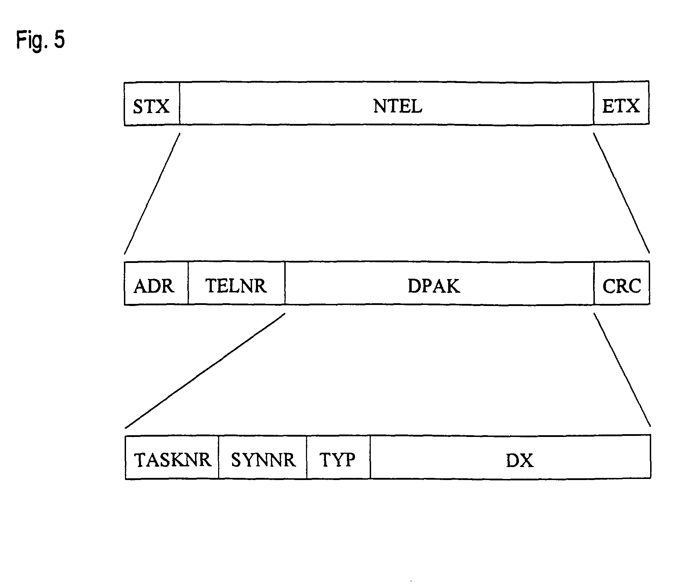

Die Figur 4 verdeutlicht die Aufteilung der Anwendungen in Subsystemschritte um eine kontinuierliche Datensynchronisation gewährleisten zu können. Jede Anwendung, Teilanwendung, Prozeß oder Task kann in die Basiseinheiten "lesen von Daten" RD, "senden von Daten" TR, "empfangen von Daten" RD, "überprüfen von Daten" CP, "verarbeiten von Daten" PC1 und PC2 unterteilt werden. Aus Sicherheitsgründen empfiehlt sich eine Überprüfung der Daten durch Synchronisation mit Redundanzrechnern nach einem " lesen von Daten" RD und "einem verarbeiten von Daten" PC1 und PC2. Diese Orte werden Synchronisationspunkte genannt und können zur Identifizierung eine Synchronisationsnummer SYNNR gemäß Fig. 5 erhalten. Ein System nach Fig. 4 unterstützt sowohl unitäre wie auch diversitäre Verarbeitung von Daten. Falls das Überprüfen der Daten CP einen Fehler detektiert, kann sofort mit einer Fehlerbehandlung EX begonnen werden. Die Fehlerbehandlung EX ist anwendungsspezifisch und kann zum Beispiel ein Anhalten der Rechner bewirken mit Fehlermeldung nach außen.
Falls in einem solchen Subsystemschritt keine Fehler detektiert wurden, werden die Daten an den nächsten Subsystemschritt OT zum Lesen weitergegeben.

Figur 5 zeigt einen beispielhaften Telegrammaufbau. Ein Telegramm beginnt mit einer Startkennung STX gefolgt vom Nutz-Telegramm NTEL und einem Abschluß ETX. Die Startkennung STX und der Abschluß ETX wird für eine sicher Erkennung des Telegramms verwendet.
Ein Nutztelegramm NTEL besteht aus den Einheiten:
- Adresse ADR für die Identifikation des Rechners,
- Telegrammnummer TELNR als fortlaufende Zahl zur eindeutigen Identifizierung des Telegramms,
- variable Anzahl Datenpakete DPAK der Datensynchronisierung
- und einer Telegrammüberprüfung CRC zur Feststellung, ob das Telegramm unverfälscht übermittelt wurde.
Ein Datenpaket DPAK besteht aus
- der eindeutigen Task-Nummer TASKNR einer Anwendung,
- aus einer Nummer SYNNR des Synchronisationspunktes innerhalb des entsprechenden Tasks der Anwendung,
- einer Angabe des Datentyps TYP und
- den Eigentlichen Daten DX.
Durch die Angabe des Datentyps TYP wird sichergestellt, dass die Datentypen auf allen beteiligten Rechnern identisch sind.

## Patentansprüche

1. Vorrichtung zur Synchronisation eines Systems von von gekoppelten Datenverarbeitungsanlagen, insbesondere der Eisenbahntechnik
**dadurch gekennzeichnet, daß** im System nur eine Datenverarbeitungsanlage (R1) mit einem ihr zugewiesenen aktivem Hardwarezeitgeber vorgesehen ist, wobei ein Betrieb des aktiven Hardwarezeitgebers mittels in der Vorrichtung generierbarer Daten definierbar ist, und daß ein Synchronisationstakt (Tick) für die übrigen gekoppelten Datenverarbeitungsanlagen (R2) durch taktsendende Telegramme (1.1 - 2.2) erzeugbar ist.

2. Vorrichtung nach Anspruch 1,
**dadurch gekennzeichnet, daß** eine einzelne Datenverarbeitungsanlage schichtenweise gebaut ist, wobei sich mindestens ein Synchronisationsmodul (SYN&CHK) und/oder mindestens ein Kommunikationsmodul (2/3-COM) zwischen einer Hardwareschicht (HW-LAY) und einer Betriebssystemschicht (OS-LAY) angeordnet und als Treiberfunktion für diese Datenverarbeitungsanlage ausgebildet sind.

3. Verfahren zur Synchronisation eines Systems von gekoppelten Datenverarbeitungsanlagen, insbesondere der Eisenbahntechnik, welche zeitabhängige Prozesse ausführen
**dadurch gekennzeichnet, daß**
a) durch einen einer Datenverarbeitungsanlage (R1) zugewiesenen Hardwarezeitgeber ein Synchronisationstakt (Tick) generiert wird,
b) der Synchronisationstakt (Tick) von dieser Datenverarbeitungsanlage (R1) durch taktsendende Telegramme (1.1) an die übrigen gekoppelten Datenverarbeitungsanlagen (R2) übermittelt wird, und
c) die gekoppelten Datenverarbeitungsanlagen (R2) ihre Prozesse nach diesem Synchronisationstakt (Tick) durchführen.

4. Verfahren nach Anspruch 3,
**dadurch gekennzeichnet, daß** auf den durch Telegramm (1.1) übermittelten Synchronisationstakt (Tick) alle übrigen gekoppelten Datenverarbeitungsanlagen (R2) mit einem eigenen Telegramm (2.1) an die taktübermittelnde Datenverarbeitungsanlage antworten, und daß die Vollständigkeit und/oder die Korrektheit der Telegrammübermittlung durch die taktübermittelnde Datenverarbeitungsanlage (R1) kontrolliert wird.

5. Verfahren nach Anspruch 3 oder 4,
**dadurch gekennzeichnet, daß** die taktsendenden Telegramme (1.2(D1)) bei Bedarf mit Daten (D1) für einen Datenaustausch unter den Datenverarbeitungsanlagen (R1,R2) ergänzt werden.

6. Verfahren nach einem der Ansprüche 3 bis 5,
**dadurch gekennzeichnet,**
**daß** innerhalb der Prozesse gleichbleibende Subsystemschritte (RD,PC1,PC2,OT) definiert werden, in welchen Synchronisationspunkte, für eine vom Synchronisationstakt (Tick) gesteuerte Datensynchronisation, erreicht werden.

7. Verfahren nach einem der Ansprüche 3 bis 6,
**dadurch gekennzeichnet, daß** eine Zuweisung eines Hardwarezeitgebers zu einer der gekoppelten Datenverarbeitungsanlage (R1) während des Verfahrensstarts (PON) statisch mittels aus einem Speicher generierbarer Daten realisiert wird.

8. Verfahren nach Anspruch 7,
**dadurch gekennzeichnet, daß** die Zuweisung während des Betriebs in Abhängigkeit vom Zustand des Systems geändert wird.
